# EUROPÄISCHE PATENTSCHRIFT

(11) **EP 2 342 008 B1**
(45) Veröffentlichungstag und Bekanntmachung des Hinweises auf die Patenterteilung: **03.04.2013**
(21) Anmeldenummer: 09714208.7
(22) Anmeldetag: 27.01.2009
(51) Int. Cl.: C10J 3/00, C10J 3/86, C10K 3/04, F02C 3/30, C01B 3/50, C01B 31/20, C01B 31/00, F01K 23/06, F02C 3/28

(54) **IGCC-KRAFTWERK MIT RAUCHGASRÜCKFÜHRUNG UND SPÜLGAS**
IGCC POWER PLANT HAVING FLUE GAS RECIRCULATION AND FLUSHING GAS
CENTRALE ÉLECTRIQUE IGCC À RECYCLAGE DE GAZ DE FUMÉE ET À GAZ DE LAVAGE

(30) Priorität: 28.02.2008 DE 102008011771
(43) Veröffentlichungstag der Anmeldung: 13.07.2011
(73) Patentinhaber: Forschungszentrum Jülich GmbH, 52425 Jülich (DE)
(72) Erfinder: MENZER, Reinhard, 52152 Simmerath (DE); RIENSCHE, Ernst, 52428 Jülich (DE); PETERS, Ralf, 52146 Würselen (DE); BLUM, Ludger, 52428 Jülich (DE); SCHERER, Viktor, 45549 Sprockhövel (DE)
(86) Internationale Anmeldenummer: PCT/DE2009/000108
(87) Internationale Veröffentlichungsnummer: WO 2009/106027

(56) Entgegenhaltungen:
- US-A1- 2004 029 983
- US-A1- 2007 072 949
- BRACHT M ET AL: "Water gas shift membrane reactor for CO2 control in IGCC systems: techno-economic feasibility study", ENERGY CONVERSION AND MANAGEMENT, ELSEVIER SCIENCE PUBLISHERS, OXFORD, GB, Bd. 38, Nr. 1001, 1. Januar 1997 (1997-01-01), Seiten S159-S164, XP004061592, ISSN: 0196-8904, DOI: DOI:10.1016/S0196-8904(96)00263-4

## Beschreibung

Die Erfindung betrifft ein Kraftwerk, insbesondere IGCC (Integrated Gasification Combined Cycle) -Kraftwerk, sowie ein Verfahren zum Betreiben desselben.

### Stand der Technik

Die Kurzbezeichnung IGCC steht für Integrated Gasification Combined Cycle. IGCC-Kraftwerke sind Gas- und Dampfturbinen-Kraftwerke (GUD-Kraftwerk), denen eine Stufe zur Kohlevergasung vorgeschaltet wird. Bei der Kohlevergasung wird aus Kohle in einem Vergaser unterstöchiometrisch (λ ungefähr zwischen 0,2 und 0,4) ein brennbares Gas, das Wasserstoff enthält, erzeugt. Mittlerweile können auch alternativ Öl, Raffinerie-Rückstände, Biomasse oder Abfall eingesetzt werden. Das Produktgas wird gereinigt und dem Gas- und Dampfturbinenprozess zugeführt. Mit diesem Verfahren lässt sich ein Wirkungsgrad von 0,6 und bei Restwärmenutzung ein solcher von 0,8 erreichen. In einem zusätzlichen Schritt kann das bei diesem Prozess entstehende Kohlendioxid abgetrennt und einer Endlagerung zugeführt werden.

Der IGCC-Prozess ermöglicht die technisch einfache Kohlendioxid-Abscheidung vor dem eigentlichen Verbrennungsprozess. Dies ist ein wesentlicher Vorteil im Vergleich zu Techniken, bei denen das Kohlendioxid aus dem Rauchgas entfernt werden muss. Das Rauchgas enthält bei einer atmosphärischen Verbrennung über 80 Prozent Stickstoff, dessen Abtrennung erheblichen Aufwand bedeutet. Die IGCC-Technologie kann damit einen wesentlichen Beitrag zur Senkung der Kohlendioxid-Emissionen und damit zur Verringerung des vom Menschen verursachten Treibhaus-Effektes beitragen.

Ein weiterer Vorteil der IGCC besteht in der Nutzung einer Gasturbine mit Generator, die aus der Verbrennung des Gases elektrische Energie erzeugt und der kombinierten Nutzung der Abwärme dieser Gasturbine in einer nachgeschalteten Dampfturbine. Systemwirkungsgrade von 50 bis 55 Prozent sind heute erreichbar und liegen deutlich über den 40 bis 45 Prozent eines normalen Kohlekraftwerks.

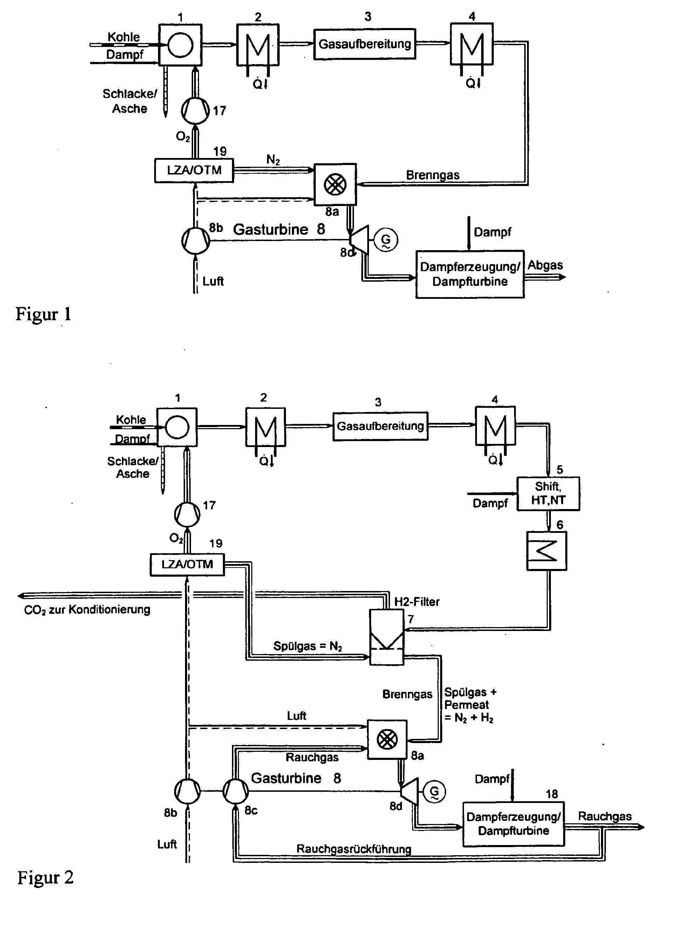

Kraftwerke dieser Bauart (siehe Figur 1) werden bisher in der Art betrieben, dass das im Vergasungsprozess erzeugte Gas nach der erforderlichen Gasreinigung unmittelbar als Brenngas dem GuD-Prozess zugeführt wird. In diesem GuD-Prozess wird dieses Brenngas in der Brennkammer der Gasturbine verbrannt und ein Teil der dem Gas anhaftenden Energie durch Entspannung in einem Turbinenprozess in mechanische Energie überführt. Die vorhandene fühlbare Wärme wird in einem anschließenden Dampfturbinenprozess verwertet. Die Konzentration an Kohlendioxid, CO₂, im Rauchgas dieses Prozesses ist gering. Sie liegt typischerweise unter 10 Vol.%. Eine Abtrennung des CO₂ aus dem Rauchgas kann mit dem gleichen Verfahren durchgeführt werden, wie das bei den heute üblichen Dampfkraftwerken möglich ist. Dabei ist zu beachten, dass mit sinkender Konzentration an CO₂ im Rauchgas der technische Aufwand zur Abtrennung des CO₂ ansteigt. Der technische Aufwand zur Abtrennung des CO₂ hat einen negativen Einfluss auf den Wirkungsgrad des Verfahrens.

Eine Auftrennung des Brenngases in ein Brenngas, das keinen oder nur einen geringen Teil an Kohlenstoffverbindungen CO (Kohlenmonoxid) und CO₂ (Kohlendioxid) enthält, und einen Gasstrom, der ausschließlich oder überwiegend CO und CO₂ enthält, ist für den Vorgang der Abtrennung des CO₂ und dessen Konditionierung für eine Endlagerung vorteilhaft.

Eine Möglichkeit ist es, aus einem modifizierten, mittels der Shift-Reaktion mit Wasserstoff angereichertem Brenngas eine Abtrennung des Wasserstoffs mit einem Wasserstofffilter zu bewirken. Dies führt zu einem Restgas, das, abhängig von der Verfahrensführung, einen so hohen Anteil an CO₂ enthalten kann, der es ermöglicht, das Restgas ggf. zu verflüssigen und somit für eine Endlagerung vorzubereiten. Dieses Ziel kann beispielsweise mit einem ausschließlich oder überwiegend für Wasserstoff durchlässigen Membranfilter erreicht werden. Eine Modifikation des IGCC- Prozesses auf diese Art wurde bereits von Göttlicher, Gerold, in,, Energetik der Kohlendioxidrückhaltung in Kraftwerken", (1999) VDI-Verlang, Düsseldorf, 1999, ISBN 3-18-342106-2 beschrieben. Als eine Möglichkeit zur Verbesserung der Wasserstoffabtrennung schlägt Göttlicher dabei auch die Verwendung von Stickstoff als Spülgas vor. Der Stickstoff wird dabei, wie auch beim sonst üblichen IGCC-Prozess, aus einer für den Gesamtprozess notwendigen Luftzerlegungsanlage, LZA, erhalten (siehe Figur 2).

So ist beispielsweise aus M. Bracht et al. "Water gas shift membrane reactor for CO2 control in IGCC systems: techno-economic feasibility study", Energy Conversion and Managament, Elsevier Science Publishers, Oxford, GB, Bd. 38, Nr. 1001, 1. Januar 1997 (1997-01-01), Seiten 159 bis 164 ein Verfahren zum Betreiben eines IGCC-Kraftwerks mit den folgenden :
- einem Vergaser wird ein fester Brennstoff, Dampf und Sauerstoff zugeführt (Gasifier),
- das Brenngas aus dem Vergaser, umfassend CO und Wasserstoff, wird wenigstens einer Shiftstufe zugeführt, wo eine Umwandlung des CO mit Wasserdampf überwiegend in CO₂ und Wasserstoff erfolgt,
- das Brenngas wird wenigstens einem Gasreinigungsschritt (Gas cleaning) unterzogen, wobei die Gasreinigungsschritte vor einzelnen Shiftstufen angeordnet sein können,
- das Wasserstoff- und CO₂ -haltige Brenngas wird über einen Membranfilter geleitet, welches den Wasserstoff selektiv aus dem Brenngas zumindest teilweise abtrennt, wobei ein Spülgas (N2) auf der Seite des Retentats zum Erreichen eines treibenden Potentials eingesetzt wird,
- das an Wasserstoff abgereicherte Brenngas wird einer CO₂ -Konditionierung zugeführt,
- ein Teil des abgetrennten Wasserstoffs wird zusammen mit dem Spülgas (N₂) einer Gasturbine zugeführt.

### Aufgabe der Erfindung

Aufgabe der Erfindung ist es, ein IGCC-Kraftwerk zur Verfügung zustellen, bei dem ein unter Druck stehendes Abgas erzeugt wird, das fast ausschließlich aus CO₂ besteht, und daher mit nur geringem zusätzlichem Energieaufwand verflüssigt werden kann. Ferner ist es die Aufgabe der Erfindung, ein solches IGCC-Kraftwerk zu schaffen, bei dem auf die externe Zuführung von Luft als Basis für Spülgase verzichtet werden kann.

Des Weiteren ist es die Aufgabe der Erfindung, ein Verfahren zum Betreiben eines IGCC-Kraftwerks zur Verfügung zu stellen, welches die vorgenannten Eigenschaften aufweist.

Die Aufgaben der Erfindung werden gelöst durch ein IGCC-Kraftwerk mit der Gesamtheit an Merkmalen gemäß Hauptanspruch sowie durch ein Verfahren zum Betreiben desselben gemäß Nebenanspruch. Vorteilhafte Ausgestaltungen des Kraftwerkes, bzw. des Verfahrens finden sich in den jeweils rückbezogenen Ansprüchen.

### Gegenstand der Erfindung

Die Erfindung betrifft ein IGCC-Kraftwerk mit Membranfiltern zwecks Trennung von Gasen unter Nutzung von Spülgasen sowie ein Verfahren zum Betreiben desselben, welches vorteilhaft die Gewinnung der Spülgase innerhalb des IGCC-Pozesses ermöglicht.

Das Prinzip des erfindungsgemäßen Kraftwerkes basiert auf dem schon durch Göttlicher bekannten IGCC-Kraftwerk mit Membranfilter, bei dem jedoch vorteilhaft das Spülgas für den Membranfilter nicht extern, z. B. durch eine Luftzerlegungsanlage bereit gestellt wird, sondern dieses Spülgas direkt aus dem Prozess selbst, insbesondere aus der Gasturbine entnommen wird. Zu diesem Zweck wird vorteilhaft ein Teil des schon unter hohem Druck stehenden Abgases der Brennkammer der Gasturbine zur Permeatseite des Membranfilters geführt.

Das hier dargestellte erfindungsgemäße Verfahren ist gegenüber dem bisher durchgeführten IGCC-Verfahren besonders vorteilhaft, weil es zu einem Abgas führt, das fast ausschließlich aus CO₂ besteht, welches zudem unter Druck erzeugt wird. Dieses Abgas kann mit geringem zusätzlichem Energieaufwand verflüssigt werden, und der für eine Endlagerung notwendige Druck kann bei flüssigem CO₂ ebenfalls mit geringem zusätzlichem Energieaufwand erzeugt werden. Es ist in der Regel kein weiterer Schritt als Aufbereitung des Abgases zur Anreicherung des CO₂ im Abgas notwendig, weil alle dafür notwendigen Schritte integrale Bestandteile des Verfahrens sind.

Gegenüber dem bisher bekannten Vorschlag von Göttlicher [1], Fig. 2, hat es den Vorteil, dass das Spülgas zur Abtrennung des Wasserstoffs in einem Membranfilter nicht von außen, z. B. aus einer Luftzerlegungsanlage (LZA), zugeführt werden muss, sondern innerhalb des Prozesses erzeugt wird.

Das erfindungsgemäße IGCC-Kraftwerk weist gegenüber einem herkömmlichen IGCC-Kraftwerk eine Kreislaufführung auf, umfassend einen Wasserstoffmembranfilter zur Abtrennung von Wasserstoff aus dem Prozessgas sowie die Brennkammer der Gasturbine, wobei die Leitungen der Kreislaufführung von der Brennkammer zur Permeatseite des Wasserstoffmembranfilters und von dort wieder zur Brennkammer führen. Optional sind in dieser Kreislaufführung Wärmetauscher sowie ein Verdichter angeordnet.

### Spezieller Beschreibungsteil

Die aus dem Stand der Technik bekannten IGCC-Kraftwerksprozesse, wie sie im einleitenden Teil dieser Anmeldung vorgestellt wurden, sind in den Figuren 1 und 2 dargestellt. Das Konzept eines erfindungsgemäßen IGCC-Kraftwerks sowie die einzelnen Verfahrenschritte zum Betreiben desselben werden im Folgenden ausführlich anhand einer Schemazeichnung (Figur 3) näher erläutert, wobei die Figur 3 eine besonders vorteilhafte Ausgestaltung der Erfindung darstellt. Es zeigen:
- Figur 1:: Herkömmlicher IGCC-Prozess
- Figur 2:: IGCC-Prozess mit der Nutzung von N₂ aus einer LZA als Spülgas im H₂-Filter zwecks Abtrennung von H₂ und CO₂-Anreicherung im Abgas

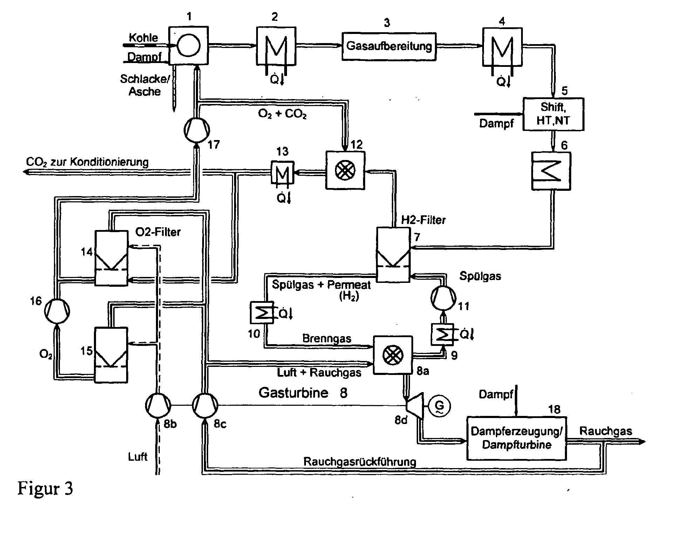

- Figur 3:: Erfindungsgemäßer IGCC-Prozess mit Spülgaserzeugung innerhalb des Prozesses und die Nutzung des Spülgases im H₂-Filter zwecks Abtrennung von H₂ und CO₂-Anreicherung im Abgas

In den Figuren 1 bis 3 bedeuten ferner:

| | | |
|---|---|---|
| 1 | Vergaser | |
| 2,4,6,9,10,13 | Wärmetauscher | |
| 3 | Gasreinigungsstufe | |
| 5 | Shiftstufe | |
| 7 | Membranfilter mit H₂-Membran | |
| 8 | Gastrubine mit | 8a Brennkammer |
| | | 8b, 8c Verdichter |
| | | 8d Generator |
| 11, 16, 17 | Verdichter | |
| 12 | Brennkammer | |
| 14, 15 | Membranfilter mit O₂-Membran | |
| 18 | Dampfturbine | |
| 19 | Luftzerlegungsanlage (LZA) | |

Die Darstellung der Gasströme erfolgt gemäß DIN 2481 mit a: nicht brennbare Gase, b: Luft, c: fester Brennstoff, d: brennbare Gase, e: Asche, Schlacke, f: Dampf.

In dem erfindungsgemäßen IGCC-Prozess wird das Bennmaterial, insbesondere Kohle, in einem Gasstrom vergast, der nur einen geringen Stickstoffanteil hat. Das Verhältnis des Sauerstoffanteils zum Anteil an Stickstoff und Argon sollte vorteilhaft in der Nähe von 19 liegen. Der Gasstrom kann neben Sauerstoff auch noch CO₂ enthalten. Die konditionierte Kohle wird dazu in einem Vergaser (Fig. 3, 1) bei hohen Temperaturen in dem genannten Gasstrom bei erhöhtem Druck, vorzugsweise nicht unter 30 bar, in ein kohlenmonoxidreiches, wasserstoffhaltiges Prozessgas überführt. Dieser Vorgang findet typischerweise bei Temperaturen zwischen 800 und 1500 °C statt. Das entstehende Gas wird gekühlt. Die überschüssige Wärme wird im Gesamtprozess verwertet.

In einem Shift-Prozess (Fig. 3, 5) wird das kohlenmonoxidreiche Prozessgas anschließend zu einem wasserstoffreichen Produktgas umgesetzt. Das Prozessgas wird passend zu den einzelnen Prozessschritten verschiedenen Gasreinigungsstufen mit Feststoff- und Schwefelabscheidung unterzogen, die hier nicht weiter betrachtet werden. Diese Gasreinigungsschritte können vor, hinter, und zwischen den einzelnen Shift-Stufen angeordnet sein. Auch innerhalb der Shift-Stufen können zur Gasreinigung notwendige Schritte angeordnet sein.

In dem erfindungsgemäßen Verfahren soll das Brenngas Wasserstoff mittels einer spezifisch arbeitenden Membran vom CO₂-haltigen Gasstrom abgetrennt werden. Dazu wird in einem weiteren Schritt mittels einer wasserstoffdurchlässigen Membran, insbesondere einem H₂-Filter (Fig. 3, 7), Wasserstoff (H₂) als Energie tragende Komponente vom Produktgasstrom abgetrennt. Das so angereicherte restliche Brenngas, es ist weitgehend CO₂-frei, wird dann dem Gas- und Dampfturbinenprozess (GuD) zugeführt. Das CO₂-reiche Restgas mit nur noch wenig H₂ verbleibt unter dem Betriebsdruck des Verfahrens und kann einem Prozess zur Konditionierung zugeführt werden.

Die Membran in diesem Filter (Fig. 3, 7) ist vorzugsweise eine Membran, die Wasserstoffionen, das bedeutet Protonen, leitet. Es kann auch eine andere für die Abtrennung von Wasserstoff geeignete Membran eingesetzt werden.

In dem Trennschritt wird auf der Permeatseite ein Spülgas eingesetzt. Dieses Spülgas hat den gleichen oder ähnlichen Druck wie das Prozessgas. Dem Prozessgas, das auf der Primärseite, der Retentatseite oder auch der Prozessgasseite die Membran berührt, wird dadurch der Wasserstoff entzogen, dass der Wasserstoff durch die Membran wandert. Treibendes Potential ist hierbei die Partialdruckdifferenz des Wasserstoffs zwischen der Retentat- und der Permeatseite. Die Permeatseite ist die Sekundärseite, d. h. die Seite der Membran, zu der der Wasserstoff hinwandert. Zur Aufrechterhaltung der Wasserstoffpartialdruckdifferenz muss stets ein ausreichendes Angebot an Spülgas bestehen.

Ein erfindungswesentlicher Schritt bei diesem Verfahren ist, dass das Spülgas aus dem Verbrennungsprodukt der Gasturbine (Fig. 3, 8) selbst gewonnen wird, und zwar unmittelbar aus der Brennkammer (Fig. 3, 8a) der Gasturbine. An dieser Stelle liegt das Verbrennungsprodukt unter dem hohen Druck vor, wie er vor der Turbinenstufe (Fig. 3, 8d) der Gasturbine herrscht. Der Druck entspricht dem Druck der Vergasung, gemindert um den Druckverlust, der durch das Strömen des Gases durch Apparate und Rohre entsteht. Vorteilhaft wird stets soviel an Verbrennungsprodukt entnommen, wie zur Aufrechterhaltung der Wasserstoffpartialdruckdifferenz zwischen der Retentat- und der Permeatseite des Wasserstofffilters (Fig. 3, 7) benötigt wird.

Das Spülgas enthält im Wesentlichen Stickstoff, Wasserdampf und einen geringen Anteil an Sauerstoff, da die Verbrennung in der Gasturbine (Fig. 3, 8) in der Regel mit einem Sauerstoffüberschuss ausgeführt wird, sowie geringe Mengen an CO₂ und Argon. Eine mögliche Gaszusammensetzung wäre beispielsweise folgende:

| | |
|---|---|
| N₂: | 65 - 75 Vol.- % |
| H₂O: | 25 - 30 Vol.- % |
| O₂: | 0,6 - 1 Vol.- % |
| CO₂: | 0,6 - 1 Vol.- % |
| Ar: | 0,7 - 0,9 Vol.- % |

Der Überschuss an Sauerstoff ist auch deshalb gering, weil der Gasstrom zu einem Teil aus zurückgeführtem Rauchgas besteht. Dieses zurückgeführte Rauchgas dient vorteilhaft als Wärme aufnehmendes Gas zur Begrenzung der Verbrennungstemperatur in der Brennkammer (Fig. 3, 8a) der Gasturbine.

Nach der Abkühlung auf 400 - 500 °C am Zwischenkühler (Fig. 3, 9) wird das Spülgas in einem Verdichter (Fig. 3, 11) soweit verdichtet, dass der Druckverlust, wie er bei der Strömung des Gases durch Apparate und Rohrleitungen verursacht wird, ausgeglichen wird.

Der geringe vorhandene Anteil an Sauerstoff im Spülgas, 0,6 - 1 Vol.-%, kann vorteilhaft für eine Teilverbrennung des permeierten Wasserstoffs eingesetzt werden, so dass mit der erzeugten Wärme das nur unzureichend temperierte Prozessgas auf der Retentatseite des H₂-Filters. (Fig. 3, 7) erhitzt wird. Auf diesem Wege kann die notwendige Betriebstemperatur, für einen Protonen leitenden Wasserstofffilter beträgt diese typischerweise 550 - 600 °C, dieses Membranfilters erhalten werden. Im H₂-Filter (Fig. 3, 7) permeiert Wasserstoff, beispielsweise in Form von Protonen, von der Prozessgasseite, d. h. der Retentatseite, zur Permeatseite und wird auf diese Weise dem Spülgas zugeführt.

Der auf der Permeatseite hinter dem Membranfilter vorhandene Gasstrom enthält neben dem Spülgas die wesentliche Menge des im Gaserzeugungsprozess hergestellten Wasserstoffs. Dieses Gas besteht im Wesentlichen aus Stickstoff und Wasserstoff und liegt bei einem Druck vor, der es erlaubt, dass dieses Gas als Brenngas in die Brennkammer der Gasturbine einströmt.

Im Retentat des H₂-Filters (Fig. 3, 7) verbleibt regelmäßig nur eine geringe Menge an Wasserstoff. Dieses Retentat enthält im Wesentlichen das im Gaserzeugungsprozess (Fig. 3, 1 bis 5) erzeugte Kohlendioxid sowie Wasserdampf und den bereits genannten Rest an Wasserstoff. Dieses Retentat weist den Druck auf, wie er durch den Prozess vorgegeben ist. Dieser Druck beträgt vorzugsweise 20 -30 bar und ist regelmäßig nur um den Druckverlust gemindert, wie er sich durch die Führung des Gasstroms durch die Apparate und Rohre ergibt.

Eine besonders vorteilhäfte Ausgestaltung der Erfindung sieht vor, dass der im Retentat verbliebene Wasserstoff in einem Verbrennungsschritt (Fig. 3, 12) verbrannt wird. Das dafür notwendige sauerstoffhaltige Gas kann vorteilhaft dem Oxidationsgas vor dem Vergaser (Fig. 3, 1) entnommen werden. In einer besonderen Ausgestaltung der Erfindung kann optional dazu beispielsweise weitgehend reiner Sauerstoff an einer zusätzlichen Entnahmestelle hinter der Sauerstoffverdichtung (Fig. 3, 16) entnommen und in der Verbrennung (Fig. 3, 12) genutzt werden.

Der bei dieser Verbrennung entstehende und unter Prozessdruck stehende Gasstrom enthält nahezu ausschließlich Kohlendioxid (CO₂) und Wasserdampf. Ein Teil dieses Gasstroms kann abgetrennt und nach Abkühlung mit Kondensation und Abtrennung des Wassers der Konditionierung des CO₂ zugeführt werden. Die Option auf eine derartige Erhöhung des Anteils an CO₂ in diesem Gas ist ein wesentlicher Vorteil dieses Konzeptes, der zur effektiveren und kostengünstigen Konditionierung von CO₂ aus diesem Kraftwerk führen kann.

Eine weitere vorteilhafte Ausgestaltung der Erfindung sieht vor, dass ein anderer Teil optional als Spülgas für einen Sauerstofffilter (Fig. 3, 14) zwecks Abtrennung von Sauerstoff aus Luft eingesetzt werden kann. Zu diesem Zweck wird verdichtete Luft hinter dem Luftverdichter der Gasturbine (Fig. 3, 8b) entnommen und einem Membranfilter (Fig. 3, 14), insbesondere einem Sauerstofffilter auf der Primärseite, der Retentatseite, zugeführt. Das Spülgas, vorteilhaft ein abgezweigter Strom aus dem Restgas, wird der Sekundärseite, d. h. der Permeatseite des Membranfilters (Fig. 3, 14) zugeführt. Die Membran in diesem O₂-Filter (Fig. 3, 14) ist vorzugsweise eine Membran, die Sauerstoffionen leitet. Es kann aber auch eine andere für die Abtrennung von Sauerstoff geeignete Membran eingesetzt werden. Treibendes Potential bei dem Trennvorgang ist die Differenz der Partialdrücke des Sauerstoffs der Luftseite, der Retentatseite und der Permeatseite. Der Sauerstoff wandert durch die Membran zur Permeatseite in das Spülgas.

Auf diese Weise kann ein erheblicher Teil oder die gesamte Sauerstoffmenge, die für die Kohlevergasung benötigt wird, mit Hilfe einer Membran aus der Luft abgetrennt werden, anstelle einer sonst üblichen Luftzerlegungsanlage.

Der Gasstrom auf der Permeatseite enthält überwiegend Sauerstoff, Spülgas, d. h. CO₂-reiches Restgas und Fremdgase. Die Fremdgase stammen im Wesentlichen aus der Luft, weil auch sie in geringem Maße durch das Filter permeieren. Das Verhältnis der Sauerstoffmenge zu den Mengen dieser Fremdgase liegt vorzugsweise in der Nähe von 19. Ein solches Verhältnis ermöglicht regelmäßig einen Gehalt an Kohlendioxid im getrockneten Abgas des Gasturbinenprozesses von über 95 Vol.- %.

Eine weitere vorteilhafte Ausgestaltung der Erfindung sieht vor, dass ein weiterer Teil der für die Vergasung der Kohle notwendigen Sauerstoffmenge, die weitgehend von Fremdgasen frei ist, in einem weiteren Abtrennschritt über einen weiteren Membranfilter (Fig. 3, 15) gewonnen werden kann. Auch hier sollte das Verhältnis zwischen Sauerstoffmenge und Fremdgasmenge im Permeat vorzugsweise in der Nähe von 19 vorliegen. Zum Betrieb dieses weiteren Sauerstofffilters (Fig. 3, 15) wird jedoch kein Spülgas auf der Permeatseite eingesetzt. Der Partialdruck des Sauerstoffs in dem Gasstrom, der diesen Filter auf der Permeatseite verlässt, liegt unter dem Partialdruck des Sauerstoffs auf der Retentatseite. Dadurch besteht ein treibendes Potential für eine Sauerstoffpermeation.

Der erhaltene Sauerstoffstrom wird zur Weiterverwendung mit einem Verdichter (Fig. 3, 16) auf den erforderlichen Druck verdichtet. Der so gewonnene Sauerstoff kann vorteilhaft durch Variation seiner Menge zur Regulierung der Sauerstoffkonzentration für die Vergasung der Kohle im Vergaser (Fig. 3, 1) genutzt werden. Falls der mit Spülgas betriebene Sauerstofffilter (Fig. 3, 14) die für den Gesamtprozess notwendige Sauerstoffmenge liefern kann, können dieser zweite Sauerstofffilter (Fig. 3, 15) und der dazugehörende Verdichter (Fig. 3, 16) entfallen.

Das Retentat aus den Sauerstofffiltern (Fig. 3, 14 und 15) wird als Oxidationsmittel der Gasturbine zugeführt. Durch die verminderte Sauerstoffkonzentration wird der Bedarf an Rauchgas gemindert, das zwecks Temperaturbegrenzung der Gasturbine zugeführt wird.

Der aus der Verbrennung (Fig. 3, 12) stammende Abgasstrom (Restgas), der gegebenenfalls vor dem Sauerstofffilter (Fig. 3, 14) abgetrennt wird, besteht im Wesentlichen aus Kohlendioxid und Wasserdampf. Geringfügige Verunreinigungen können insbesondere aus den verschiedenen Gastrennungen stammen. Dieser Gasstrom liegt bei Prozessdruck vor. Der Druck in diesem Gasstrom ist ausschließlich durch Druckverluste, die durch das Strömen des Gases in Rohren und Apparaten verursacht werden, gemindert. Dieser Druck bleibt auch nach Abkühlung des Gases auf eine Temperatur unter z. B. 40 °C und der damit verbundenen Kondensation der wesentlichen Mengen des erzeugten Wassers bestehen. Nach Abtrennung des Wassers beträgt die Konzentration an Kohlendioxid CO₂ im Abgas mehr als 95 Vol.-%.

Prinzipiell können Fremdgase ins Permeat eindringen, wenn die Trennung der Gase im Filter unvollständig ist. Der Anteil an Permanentgasen ist bei der dargestellten Prozessführung in der Regel jedoch so gering, dass eine flüssige Phase des CO₂ auch bei Umgebungstemperaturen (bis 31°C) möglich ist.

Die weitgehende Aufrechterhaltung des Druckes in dem geschilderten Prozess ermöglicht die Verflüssigung des CO₂ unter Anwendung nur einer weiteren Druckstufe mit nur einem geringen Verdichtungsfaktor. Flüssiges CO₂ kann mit nur geringem Einsatz an mechanischer Energie auf eine Druckstufe gebracht werden, wie sie für die unterirdische Lagerung, bzw. Endlagerung des CO₂ benötigt wird.

## Patentansprüche

1. Verfahren zum Betreiben eines IGCC-Kraftwerks mit den Schritten
- einem Vergaser (1) wird ein fester Brennstoff, Dampf und Sauerstoff zugeführt,
- das Brenngas aus dem Vergaser (1) umfassend CO und Wasserstoff, wird wenigstens einer Shiftstufe(5) zugeführt, wo eine Umwandlung des CO mit Wasserdampf überwiegend in CO₂ und Wasserstoff erfolgt,
- das Brenngas wird wenigstens einem Gasreinigungsschritt (3) unterzogen, wobei der oder die Gasreinigungsschritte vor, hinter oder zwischen einzelnen Shiftstufen angeordnet sein können,
- das Wasserstoff- und CO₂-haltige Brenngas wird über einen Membranfilter (7) geleitet, welches den Wasserstoff selektiv aus dem Brenngas zumindest teilweise abtrennt, wobei ein Spülgas auf der Seite des Retentats zum Erreichen eines treibenden Potentials eingesetzt wird,
- das an Wasserstoff abgereicherte Brenngas wird einer CO₂-Konditionierung zugeführt,
- der abgetrennte Wasserstoff wird zusammen mit dem Spülgas einer Gasturbine zugeführt, **dadurch gekennzeichnet,**
- **dass** als Spülgas für den Membranfilter ein Teil des in der Gasturbine erzeugten Abgases eingesetzt wird und dass das Spülgas direkt von der Brennkammer der Gasturbine(8a) zur Permeatseite des Membranfilters (7) geleitet wird.

2. Verfahren zum Betreiben eines IGCC-Kraftwerks nach Anspruch 1, bei dem eine Protonen leitenden Membran als Membranfilter (7) eingesetzt wird.

3. Verfahren zum Betreiben eines IGCC-Kraftwerks nach Anspruch 1 oder 2, bei dem das Spülgas im Membranfilter (7) einen annähernd hohen Druck wie das Brenngas aufweist.

4. Verfahren zum Betreiben eines IGCC-Kraftwerks nach einem der Ansprüche 1 bis 3, bei dem das Spülgas vor der Einleitung in den Membranfilter (7) abgekühlt wird.

5. Verfahren zum Betreiben eines IGCC-Kraftwerks nach einem der Ansprüche 1 bis 4, bei dem das Spülgas vor der Einleitung in den Membranfilter (7) verdichtet wird.

6. Verfahren zum Betreiben eines IGCC-Kraftwerks nach einem der Ansprüche 1 bis 5, bei dem das an Wasserstoff abgereicherte Brenngas vor einer CO₂-Konditionierung zunächst verbrannt wird.

7. Verfahren zum Betreiben eines IGCC-Kraftwerks nach Anspruch 6, bei dem für die Verbrennung des abgereicherten Brenngases Sauerstoff eingesetzt wird.

8. Verfahren zum Betreiben eines IGCC-Kraftwerks nach Anspruch 7, bei dem für die Verbrennung des abgereicherten Brenngases Sauerstoff aus einer Luftzerlegungsanlage (19) eingesetzt wird.

9. Verfahren zum Betreiben eines IGCC-Kraftwerks nach einem der Ansprüche 1 bis 8, bei dem der Sauerstoff für den Vergaser (1) und/oder die Verbrennung (12) des abgereicherten Brenngases über wenigstens eine Sauerstoff leitende Membran (14, 15) gewonnen wird.

10. IGCC-Kraftwerk, umfassend
- einen Vergaser (1) zur Vergasung eines festen Brennstoffs,
- ein Mittel zur Bereitstellung von Sauerstoff für den Vergaser (1),
- wenigstens eine dem Vergaser nachgeschaltete Shiftstufe (5) zur Umwandlung von CO und Wasserdampf in CO₂ und Wasserstoff,
- wenigstens eine dem Vergaser (1) nachgeschaltete Gasreinigungsstufe (3),
- einen dem Vergaser (1) nachgeschalteten Membranfilter (7) mit einer Wasserstoffselektiven Membran,
- ein Mittel zur Bereitstellung von Spülgas für die Permeatseite des Membranfilters (7) und eine Gasturbine (8),
- wobei eine Leitung von der Permeatseite des Membranfilters (7) zu der Brennkammer (8a) der Gasturbine (8) führt, **dadurch gekennzeichnet, dass** das Mittel zur Bereitstellung des Spülgases die Brennkammer der Gasturbine (12) ist, und eine weitere Leitung von der Brennkammer (8a) zur Permeatseite des Membranfilters (7) angeordnet ist.

11. IGCC-Kraftwerk nach Anspruch 10, bei dem die beiden Leitungen zwischen der Permeatseite des Membranfilters und der Brennkammer (8a) der Gasturbine (8) als Kreislaufführung ausgestaltet sind.

12. IGCC-Kraftwerk nach einem der Ansprüche 10 bis 11, bei dem in den Leitungen zwischen der Permeatseite des Membranfilters (7) und der Brennkammer (8a) der Gasturbine (8) wenigstens ein Wärmetauscher (9, 10) oder ein Verdichter (11) angeordnet ist.

13. IGCC-Kraftwerk nach einem der Ansprüche 10 bis 12, mit einer der Retentatseite des Membranfilters (7) nachgeschalteten Verbrennungskammer (12).

14. IGCC-Kraftwerk nach einem der Ansprüche 10 bis 13, mit einer Luftzerlegungsanlage (19) oder wenigstens einem weiteren Membranfilter (14, 15) mit einer Sauerstoffselektiven Membran als Mittel zur Bereitstellung von Sauerstoff.

## Claims

1. Method for operating an IGCC power plant with the steps
- a solid fuel, steam and oxygen are supplied to a gasifier (1),
- the fuel gas from the gasifier (1), comprising CO and hydrogen, is supplied to at least one shift stage (5), where the CO is converted predominantly into CO₂ and hydrogen with steam,
- the fuel gas is subject to at least one gas cleaning step (3), in which the gas cleaning step or steps may be arranged before, after or between individual shift stages,
- the fuel gas, which contains hydrogen and CO₂, is conducted through a membrane filter (7), which at least partly separates the hydrogen selectively from the fuel gas, in which a flushing gas is used on the side of the retentate to obtain a driving potential,
- the fuel gas, which has been depeleted of hydrogen, is supplied to CO₂ conditioning,
- the separated hydrogen is supplied to a gas turbine together with the flushing gas, **characterised in that**
- a part of the exhaust gas produced in the gas turbine is used as the flushing gas for the membrane filter and the flushing gas is conducted directly from the combustion chamber of the gas turbine (8a) to the permeate side of the membrane filter (7)

2. Method for operating an IGCC power plant according to claim 1, in which a membrane, which conducts protons, is used as the membrane filter (7).

3. Method for operating an IGCC power plant according to claim 1 or 2, in which the flushing gas in the membrane filter (7) has a pressure, which is almost as high as that of the fuel gas.

4. Method for operating an IGCC power plant according to one of claims 1 to 3, in which the flushing gas is cooled before being introduced into the membrane filter (7).

5. Method for operating an IGCC power plant according to one of claims 1 to 4, in which the flushing gas is compressed before being introduced into the membrane filter (7).

6. Method for operating an IGCC power plant according to one of claims 1 to 5, in which the fuel gas, which has been depeleted of hydrogen, is burned before CO₂ conditioning.

7. Method for operating an IGCC power plant according to claim 6, in which oxygen is used for combustion of the fuel gas, which has been depleted.

8. Method for operating an IGCC power plant according to claim 7, in which oxygen from an air decomposition unit (19) is used for combustion of the fuel gas, which has been depleted.

9. Method for operating an IGCC power plant according to one of claims 1 to 8, in which the oxygen for the gasifier (1) and/or combustion (12) of the fuel gas, which has been depleted, is obtained through at least one membrane (14,15), which conducts oxygen.

10. IGCC power plant, comprising
- a gasifier (1) for gasification of a solid fuel,
- a means of providing oxygen for the gasifier (1),
- at least one shift stage (5) after the gasifier for converting CO and steam into CO₂ and hydrogen,
- at least one gas cleaning stage (3) after the gasifier (1),
- a membrane filter (7) after the gasifier (1) with a hydrogen selective membrane,
- a means of providing flushing gas for the permeate side of the membrane filter (7) and a gas turbine (8),
- in which a line leads from the permeate side of the membrane filter (7) to the combustion chamber (8a) of the gas turbine (8), characaterised in that the means of providing flushing gas is the combustion chamber of the gas turbine (12) and a further line is arranged from the combustion chamber (8a) to the permeate side of the membrane filter (7).

11. IGCC power plant according to claim 10, in which both lines between the permeate side of the membrane filter and the combustion chamber (8a) of the gas turbine (8) are made as circulating lines.

12. IGCC power plant according to one of claims 10 to 11, in which at least one heat exchanger (9, 10) or a compressor (11) is arranged between the permeate side of the membrane filter (7) and the combustion chamber (8a) of the gas turbine (8).

13. IGCC power plant according to one of claims 10 to 12, with a combustion chamber (12) after the retentate side of the membrane filter (7).

14. IGCC power plant according to one of claims 10 to 13, with an air decomposition unit (19) or at least one further membrane filter (14,15) with an oxygen selective membrane as the means of providing oxygen.

## Revendications

1. Procédé servant à faire fonctionner une centrale électrique IGCC, comprenant les étapes suivantes consistant à :
- amener un gaz combustible solide, de la vapeur et de l'oxygène à un gazéificateur (1) ;
- amener le gaz combustible issu du gazéificateur (1), comprenant du monoxyde de carbone et de l'hydrogène à au moins un étage de modification (5) où a lieu la transformation du monoxyde de carbone avec de la vapeur d'eau principalement en dioxyde de carbone et en hydrogène,
- soumettre le gaz combustible à au moins une opération d'épuration du gaz (3), sachant que l'opération/les opérations d'épuration de gaz peuvent être prévues avant, après ou entre divers étages de modification,
- acheminer le gaz combustible contenant de l'hydrogène et du dioxyde de carbone par l'intermédiaire d'un filtre à membrane (7), lequel sépare au moins en partie de manière sélective l'hydrogène du gaz de combustible, sachant qu'un gaz de lavage est utilisé sur le côté du rétentat pour atteindre un potentiel d'entraînement,
- amener le gaz combustible appauvri en hydrogène à une unité de conditionnement du dioxyde de carbone,
- amener l'hydrogène appauvri conjointement avec le gaz de lavage à une turbine de gaz,
**caractérisé en ce**
- **qu'**une partie des gaz d'échappement générés dans la turbine à gaz est utilisée comme gaz de lavage pour le filtre à membrane, et en ce que le gaz de lavage est acheminé directement de la chambre de combustion de la turbine à gaz (8a) en direction du côté perméat du filtre à membrane (7).

2. Procédé servant à faire fonctionner une centrale électrique IGCC selon la revendication 1, dans le cadre duquel une membrane acheminant des protons est utilisée comme filtre à membrane (7).

3. Procédé servant à faire fonctionner une centrale électrique IGCC selon la revendication 1 ou 2, dans le cadre duquel le gaz de lavage présente dans le filtre à membrane (7) une pression approximativement élevée telle que celle du gaz de combustion.

4. Procédé servant à faire fonctionner une centrale électrique IGCC selon l'une quelconque des revendications 1 à 3, dans le cadre duquel le gaz de lavage est refroidi avant d'être introduit dans le filtre à membrane (7).

5. Procédé servant à faire fonctionner une centrale électrique IGCC selon l'une quelconque des revendications 1 à 4, dans le cadre duquel le gaz de lavage est comprimé avant d'être introduit dans le filtre à membrane (7).

6. Procédé servant à faire fonctionner une centrale électrique IGCC selon l'une quelconque des revendications 1 à 5, dans le cadre duquel le gaz combustible appauvri en hydrogène est brûlé en premier lieu avant un processus de conditionnement du dioxyde de carbone.

7. Procédé servant à faire fonctionner une centrale électrique IGCC selon la revendication 6, dans le cadre duquel on utilise pour la combustion du gaz de combustion appauvri, de l'oxygène.

8. Procédé servant à faire fonctionner une centrale électrique IGCC selon la revendication 7, dans le cadre duquel on utilise pour la combustion du gaz combustible appauvri de l'oxygène issu d'une installation de décomposition d'air (19).

9. Procédé servant à faire fonctionner une centrale électrique IGCC selon l'une quelconque des revendications 1 à 8, dans le cadre duquel l'oxygène pour le gazéificateur (1) et/ou la combustion (12) du gaz de combustion appauvri est obtenu par l'intermédiaire au moins d'une membrane (14, 15) acheminant de l'oxygène.

10. Centrale électrique IGCC, comprenant,
- un gazéificateur (1) servant à gazéifier un combustible solide,
- un moyen servant à fournir de l'oxygène pour le gazéificateur (1),
- au moins un étage de modification (5) installé en aval du gazéificateur servant à transformer du monoxyde de carbone et de la vapeur d'eau en dioxyde de carbone et en hydrogène,
- au moins un étage d'épuration de gaz (3) installé en aval du gazéificateur (1),
- un filtre à membrane (7) avec une membrane de sélection de l'hydrogène, installé en aval du gazéificateur (1),
- un moyen servant à fournir du gaz de lavage pour le côté perméat du filtre à membrane (7) et une turbine à gaz (8),
- sachant qu'une conduite mène du côté perméat du filtre à membrane (7) en direction de la chambre de combustion (8a) de la turbine à gaz (8), **caractérisée en ce**
**que** le moyen servant à fournir du gaz de lavage est la chambre de combustion de la turbine à gaz (12), et en ce qu'une autre conduite est installée entre la chambre de combustion (8a) et le côté perméat du filtre à membrane (7).

11. Centrale électrique IGCC selon la revendication 10, dans le cadre de laquelle les deux conduites entre le côté perméat du filtre à membrane et la chambre de combustion (8a) de la turbine à gaz (8) sont configurées sous la forme d'un équipement de circulation.

12. Centrale électrique IGCC selon l'une quelconque des revendications 10 à 11, dans le cadre de laquelle au moins un échangeur de chaleur (9, 10) ou un compresseur (11) sont disposés dans les conduites entre le côté perméat du filtre à membrane (7) et la chambre de combustion (8a) de la turbine à gaz (8).

13. Centrale électrique IGCC selon l'une quelconque des revendications 10 à 12, comprenant une chambre de combustion (12) disposée en aval du côté rétentat du filtre à membrane (7).

14. Centrale électrique IGCC selon l'une quelconque des revendications 10 à 13, comprenant une installation de décomposition d'air (19) ou au moins un autre filtre à membrane (14, 15) présentant une membrane de sélection d'oxygène comme moyen servant à fournir de l'oxygène.
